Europäisches Patentamt

European Patent Office

Office européen des brevets

(19)

(11) Publication number: **0 305 158 B1**

(12) **EUROPEAN PATENT SPECIFICATION**

(45) Date of publication of patent specification :
29.01.92 Bulletin 92/05

(21) Application number : 88307829.7

(22) Date of filing : 24.08.88

(51) Int. Cl.⁵ : **C09C 1/64**, C09D 5/38,
C09D 5/10, C09D 11/00,
C09J 4/00, C08K 3/08

(54) Aluminium flake pigment.

(30) Priority : 25.08.87 JP 210715/87

(43) Date of publication of application :
01.03.89 Bulletin 89/09

(45) Publication of the grant of the patent :
29.01.92 Bulletin 92/05

(84) Designated Contracting States :
BE DE ES FR GB IT SE

(56) References cited :
GB-A- 706 251
US-A- 3 901 688
CHEMICAL ABSTRACTS, vol. 81, no. 14, 7th
October 1974, page 94, no. 79479s, Columbus,
Ohio, US; & JP-A-74 31 403 (OIKE AND CO.,
LTD) 20-03-1974

(73) Proprietor : TOYO ALUMINIUM KABUSHIKI
KAISHA
1-25, 4-chome, Minami-Kyutaromachi
Higashi-ku
Osaka-shi Osaka-fu (JP)

(72) Inventor : Hieda, Takao
8-10, 2-chome Chiogaoka
Nara-shi Nara-ken (JP)

(74) Representative : Woods, Geoffrey Corlett et al
J.A. KEMP & CO. 14 South Square Gray's Inn
London WC1R 5EU (GB)

## Description

The invention relates to an aluminium flake pigment suitable for incorporating in a metallic paint, to a process for the preparation of said pigment and to an ink, adhesive or resin incorporating said pigment.

When the paint incorporating an aluminium flake pigment is applied to any article such as a car, the paint is necessarily circulated by any of the pumps for preventing the sedimentation of the pigment in the tank. However, a vigorous turbulent flow is caused near the pump due to this circulation. Consequently the aluminium flakes are subjected to the excess impact so as to cause the collisions between the flakes and between the flakes and the inner wall of the tank, thereby the aluminium flakes being bent and/or ruptured.

If a paint containing the bent flakes is employed, the resultant paint film will have a poor metallic brightness because the flakes in the paint film are oriented irregularly. Also, if the paint containing the ruptured flakes is employed, a dark paint film will be formed because there is a great deal of the torn pieces of the ruptured flakes.

Accordingly, an aluminium flake pigment having improved resistance to circulation required.

GB-A-706251 seeks to overcome the problem of fragmentation of such pigments during their preparation. US-A-3,901,688 refers to a wet ball milling process for the production of such pigments with an improved reflectivity and water coverage. Neither of these documents suggests the advantageous effects of the characteristics of this invention on the circulation resistance.

The invention provides an aluminium flake pigment characterized in that the ratio of the average thickness of the flakes (d ; $\mu$m) to the average diameter of the flakes ($D_{50}$ ; $\mu$m) is from 0.025 : 1 to 0.3 : 1 and the ratio of the water covering area of the flakes (WCA ; $m^2$/g) to the specific surface area of the flakes (SSA ; $m^2$/g) is from 0.18 : 1 to 0.4 : 1.

The aluminium flake pigment of the invention has improved resistance to circulation, excellent brightness and high mechanical strength.

Fig. 1 is a scanning electron microscopic photograph ($\times$ 600) showing the cross section of a painted sheet prepared with a paint incorporating the aluminium flake pigment of Example 1 after circulation.

Fig. 2 is a scanning electron microscopic photograph ($\times$ 600) showing the cross section of a painted sheet prepared with a paint incorporating the aluminium flake pigment of Comparative Example 1 after circulation.

Fig. 3 is a scanning electron microscopic photograph ($\times$ 1000) showing a cross section of a painted sheet prepared with a paint incorporating the aluminium flake pigment of Example 5 after circulation.

Fig. 4 is a scanning electron microscopic photograph ($\times$ 1000) showing a cross section of a painted sheet prepared with a paint incorporating the aluminium flake pigment of Comparative Example 4 after circulation.

The average thickness of the flakes (d), the average diameter of the flakes ($D_{50}$), the water covering area of the flakes (WCA) and the specific surface area of the flakes (SSA) herein are defined as follows :

The average thickness of the flakes (d, $\mu$m) is the value obtained by measuring the water covering area (WCA) per g of metal content and then calculating the equation :

$$d(\mu m) = 0.4 \ (m^2 \times \mu m \times g^{-1})/WCA \ (m^2 \times g^{-1})$$

(Refer to J.D. Edwards and R.I. Wray, Aluminium Paint and Powder (3rd Ed.), pp. 16 to 22, Reinhold Publishing Corp., New York (1955)).

The average diameter of the flakes ($D_{50}$, $\mu$m) is the value obtained by measuring with a Microtrac particle-size analyzer.

The water covering area (WCA, $m^2$/g) is the value obtained by the method described in J.D. Edwards and R.I. Wray, Aluminium Paint and Powder (3rd Ed.), pp. 16 to 22, Reinhold Publishing Corp., New York (1955).

The specific surface area (SSA ; $m^2$/g) is the value obtained by calculating the volume of nitrogen gas adsorbed on the flake surface per g of flakes according to the BET method.

In the invention, the aluminium flake pigment has a ratio of the average thickness of the flakes (d) to the average diameter of the flakes ($D_{50}$) of from 0.025 : 1 to 0.3 : 1. When the flakes have a ratio $d/D_{50}$ of less than 0.025 : 1, the flakes are easily bent and/or ruptured in the circulation because they are very thin. The higher the ratio $d/D_{50}$ is, the lower is the percentage of the flakes which are bent and/or ruptured in the circulation. When the flakes have a ratio $d/D_{50}$ of above 0.3 : 1, however the flakes in the paint film are not regularly oriented or oriented in parallel because each flake can move freely, although the flakes have a high resistance to circulation. Thus the resultant paint film has poor metallic brightness.

Preferably, the ratio $d/D_{50}$ is from 0.028 : 1 to 0.1 : 1.

The aluminium flake pigment of the invention has a ratio of the water covering area of the flakes (WCA ; $m^2$/g) to the specific surface area of the flakes (SSA ; $m^2$/g) of from 0.18 : 1 to 0.4 : 1. By observation of flakes having a WCA/SSA in the above range using a scanning electron microscope, it was found that most of the flakes have rounded profiles and uniform thickness and that finely divided powder or fragments are hardly attached to the flakes. Flakes of such a form have higher resistance to circulation. Observing flakes having a ratio WCA/SSA of less than 0.18 : 1 under a scanning electron microscope, shows flakes whose ends are very thinned, such as flakes having corrugated profiles, partially cracked and/or broken flakes and flakes having finely divided powder and/or broken fragments on their surfaces. These lack resistance to circulation. The higher the ratio WCA/SSA is, the lower is the percentage of the flakes which are bent and/or ruptured due to circulation. Flakes having a ratio WCA/SSA of above 0.4 : 1, however, are not suitable since the produtivity of the aluminium flake pigment is unsatisfactory, although the flakes have high resistance to circulation.

Preferably, the aluminium flake pigment of the invention has a ratio WCA/SSA of from 0.19 : 1 to 0.35 : 1.

The aluminium pigment of the invention is particularly suitable for incorporating in a paint. The aluminium pigment is mixed with any vehicle, any resin and other conventional additives to prepare a water or oily paint. Of course, other pigment(s) may be also incorporated in the paint.

Furthermore, the aluminium pigment of the invention can be incorporated in, for example inks, adhesives and resins.

The aluminium flake pigment of the invention is prepared by using any suitable process for preparing metal powder pigment.

The aluminium powder used as the starting material is selected from commercially available aluminium powders according to the intended tint. If high brightness is required, extracoarse aluminium powder is selected. If the low brightness is required, fine aluminium powder is selected. Commercially available aluminium powder can be classified according to roughness into four groups (extracoarse, coarse, medium and fine). Extracoarse aluminium powder has larger average thickness (d) and average diameter ($D_{50}$) as well as smaller water covering area (WCA) and specific surface area (SSA). Conversely, fine aluminium powder has smaller average thickness (d) and average diameter ($D_{50}$) as well as larger water covering area (WCA) and specific surface area (SSA).

The aluminium powder is milled according to a dry or wet milling process. Preferably, the aluminium powder is ground together with a grinding medium such as a mineral spirit and, if necessary, other grinding additives in a suitable mill, such as a ball mill, hammer mill or rod mill, under carefully controlled grinding conditions until the desired aluminium flakes are obtained. The rotation speed of the mill and the grinding time are varied depending on the desired characteristics of flakes. Generally, the rotation speed of the mill is from 15 to 44 rpm and the grinding time is from 1.5 to 15 hours. The temperature and the pressure are not particularly limited.

If desired, the aluminium flake may be subjected to a standard leafing treatment.

The invention is now further described in the following Examples.

Example 1

Into a ball mill (inner diameter = 500 mm, length = 180 mm) containing 50 kg of steel balls each of which has a diameter of 2 mm, a formulation consisting of 1.0 kg of atomized aluminium spherical or spheroidal powder (Alcan MDX-81, ex Alcan Aluminium Ltd.), 5.0 ℓ of mineral spirit and 500 g of oleic acid was charged. The charge in the mill was then ground by operating the mill at 38 rpm (corresponding to 64% critical rotation speed) for 3.5 hours.

After the grinding, the slurry in the mill was washed out with mineral spirit and subjected to vibrating screens of 150, 350 and 400 mesh successively. The liquid part of the passed-through slurry was removed through a pan filter. The resultant cake (NV = 85%) was transferred into a kneader and kneaded for 1 hour to obtain the aluminium flake pigment (NV = 80%).

Next, a paint was prepared from 34.3 parts by weight of the aluminium flake pigment, 160.0 parts by weight of ALMATEX 100 (acrylic resin containing 50.0% by weight of dry matter, ex MITSUI TOATSU CHEMICALS, INC.) and 33.3 parts by weight of UVAN 20SE-60 (melamine resin containing 60% by weight of dry matter, ex MITSUI TOATSU CHEMICALS, INC.). The viscosity of the paint was adjusted with a mixed solvent of ethyl acetate, butyl acetate, xylene, Solvesso 100 and Cellosolve acetate (ratio by volume = 30 : 10 : 30 : 20 : 10) so as to be 20 to 21 seconds on a Ford cup 4.

A part of the paint was subjected to circulation (simulation test). That is, 300 g of the paint was charged into a vessel provided with the jacket for circulating cooling water and stirred by a stirrer with turbine blades for 1 hour.

A painted sheet was prepared with the paint with or without subjecting it to circulation as follows :

The paint was sprayed on a polished mild steel sheet by an automatic spraying machine so that the resultant paint film had a thickness of about 20 μm. Then a clear coat was formed on the paint film by wet-on-wet coating followed by baking at 140°C for 30 minutes.

### Example 2

The procedure of Example 1 was repeated except that the grinding time was 1 hour.

### Example 3

The procedure of Example 1 was repeated except that atomized aluminium powder AB-5003 (ex TOYO ALUMINIUM K.K.) was used and the grinding time was 2.5 hours, and 19.1 parts by weight of the aluminium flake pigment was used in the preparation of the paint.

### Example 4

The procedure of Example 1 was repeated except that atomized aluminium powder Alcan MDX-65 (ex Alcan Aluminium Ltd.) was used and the grinding time was 2.5 hours.

### Example 5

The procedure of Example 1 was repeated except that a fine portion of atomized aluminium powder Alcan MDX-65 (ex Alcan Aluminium Ltd.) was used and the grinding time was 5.5 hours.
Furthermore, 14.3 parts by weight of the aluminium flake pigment was used in the preparation of the paint.

### Example 6

The procedure of Example 1 was repeated except that as the atomized aluminium powder an equal mixed powder of the fine portion of Alcan MDX-65 (ex Alcan Aluminium Ltd.) and AC-5005 (ex. TOYO ALUMINIUM K.K.) was used and the grinding time was 8 hours, and 9.5 parts by weight of the aluminium flake pigment was used in the preparation of the paint.

### Comparative Example 1

The extracoarse aluminium powder described in JP-A-49-14358 was used, which is said to have the highest quality.

### Comparative Example 2

Commercially available extracoarse aluminium powder (ex TOYO ALUMINIUM K.K.) was used.

### Comparative Example 3

Commercially available coarse aluminium powder (ex TOYO ALUMINIUM K.K.) was used.

### Comparative Example 4

Commercially available medium aluminium powder (ex TOYO ALUMINIUM K.K.) was used.

### Comparative Example 5

Commercially available fine aluminium powder (ex TOYO ALUMINIUM K.K.) was used.

### Test Example 1

The aluminium flake pigment (NV = 80%) obtained in each Example and Comparative Example was subjected to the following tests :

### test 1 : water covering area (WCA)

The aluminium flake pigment was subjected to leafing treatment by adding 1 g of stearic acid to 1 g of the aluminium flake pigment and then heating with small volume of xylene. The leafing flakes were dry-powdered with acetone to prepare the sample.

The water covering area of the sample was measured according to the method described in J.D. Edwards and R.I. Wray, Aluminium Paint and Powder (3rd Ed.), pp. 16 to 22, Reinhold Publishing Corp., New York (1955).

test 2 : average thickness (d)

The average thickness of the sample was calculated according to the above-mentioned equation based on the WCA value obtained in test 1.

test 3 : average diameter ($D_{50}$)

The average diameter of the sample was determined with a Microtrac particle-size analyzer.

test 4 : specific surface area (SSA)

The aluminium flake pigment was washed with a mixed solvent of ether and acetone and then dry-powdered with acetone to prepare the sample.

The specific surface area of the sample was calculated from the adsorbed nitrogen gas volume according to the BET method.

The test results are shown in Table 1.

Table 1

| | WCA ($m^2/g$) | d ($\mu m$) | $D_{50}$ ($\mu m$) | $d/D_{50}$ (-) | SSA ($m^2/g$) | WCA/SSA (-) |
|---|---|---|---|---|---|---|
| Example 1 | 0.15 | 2.7 | 34.9 | 0.077 | 0.80 | 0.188 |
| Example 2 | 0.10 | 4.00 | 16.0 | 0.250 | 0.56 | 0.180 |
| Comp. Example 1 | 0.36 | 0.89 | 29.8 | 0.030 | 2.25 | 0.160 |
| Comp. Example 2 | 0.50 | 0.86 | 31.4 | 0.025 | 2.90 | 0.172 |
| Example 3 | 0.50 | 0.80 | 15.5 | 0.052 | 1.45 | 0.345 |
| Example 4 | 0.80 | 0.50 | 15.9 | 0.031 | 3.35 | 0.239 |
| Comp. Example 3 | 0.90 | 0.44 | 23.9 | 0.019 | 3.92 | 0.230 |
| Example 5 | 1.20 | 0.33 | 11.2 | 0.029 | 3.90 | 0.308 |
| Comp. Example 4 | 1.33 | 0.30 | 17.6 | 0.017 | 4.46 | 0.297 |
| Example 6 | 1.70 | 0.24 | 8.5 | 0.028 | 5.49 | 0.310 |
| Comp. Example 5 | 1.60 | 0.25 | 14.0 | 0.018 | 6.20 | 0.258 |

Test Example 2

The painted sheet prepared in each Example and Comparative Example was subjected to the following tests :

test 5 : brightness

The brightness of the painted sheet prepared with the paint before circulation was compared with that of the painted sheet prepared with the paint after circulation.

The brightness was measured according to the method described in JP-A-60-3016 by a TM-type goniophotometer (ex MURAKAMI COLOR RESEARCH LABORATORY). The incidence angle was set at 45° and the oblique angle of the painted sheet was set at 5°.

test 6 : number of bent flakes

The painted sheets prepared with the paint before and after circulation were observed under a scanning electron microscope so as to count the number of bent flakes per 100 flakes in the paint film.

The test results are shown in Table 2.

Table 2

| | brightness | | | number of bent flakes | |
|---|---|---|---|---|---|
| | circulation | | retention | circulation | |
| | before | after | (%) | before | after |
| Example 1 | 190 | 180 | 95 | 0/100 | 0/100 |
| Example 2 | 160 | 155 | 97 | 0/100 | 0/100 |
| Comp. Example 1 | 170 | 94 | 55 | 2/100 | 23/100 |
| Comp. Example 2 | 157 | 80 | 51 | 4/100 | 30/100 |
| Example 3 | 186 | 184 | 99 | 0/100 | 2/100 |
| Example 4 | 179 | 166 | 93 | 0/100 | 5/100 |
| Comp. Example 3 | 156 | 126 | 81 | 2/100 | 17/100 |
| Example 5 | 153 | 152 | 99 | 0/100 | 2/100 |
| Comp. Example 4 | 153 | 103 | 67 | 2/100 | 10/100 |
| Example 6 | 98 | 96 | 98 | 0/100 | 2/100 |
| Comp. Example 5 | 95 | 83 | 87 | 8/100 | * |

*) not determined because there were many bent and/or ruptured flakes.

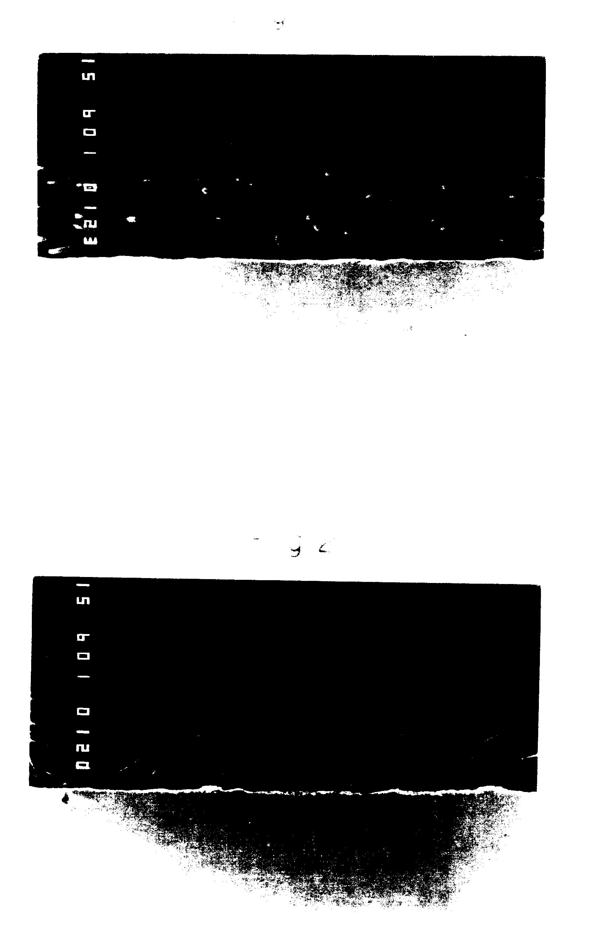

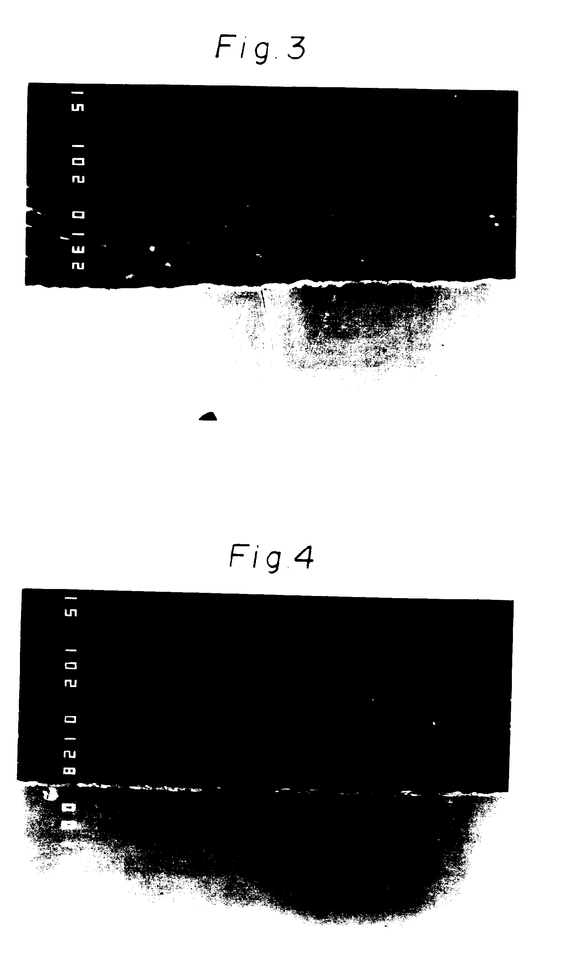

The scanning electron microscope photographs showing the cross sections of the painted sheets prepared with the paint after circulation are shown in Fig. 1 to 4. Fig. 1 and Fig. 2 show the painted sheets of Example 1 and Comparative Example 1, respectively (× 600). Fig. 3 and Fig. 4 show the painted sheets of Example 5 and Comparative Example 4, respectively (× 1000).

The aluminium flake pigment of the invention can retain its original brigthtness after circulation.

Bent and/or ruptured flakes are not substantially found in the paint film prepared from a paint incorporating the aluminium flake pigment of the invention.

The above effects are clear from the scanning electron microscopic photographs shown in the Figures. It should be noted that the aluminium flakes are oriented regularly in the painted sheets shown in Fig. 1 and Fig. 3, while the aluminium flakes are oriented irregularly in the painted sheets shown in Fig. 2 and Fig. 4.

The aluminium flake pigment of the invention has excellent resistance to circulation.

EP 0 305 158 B1

## Claims

### Claims for the following Contracting states : BE, DE, FR, GB, IT, SE

1. An aluminium flake pigment characterized in that the ratio of the average thickness of the flakes to the average diameter of the flakes is from 0.025 : 1 to 0.3 : 1 and the ratio of the water covering area of the flakes to the specific surface area of the flakes is from 0.18 : 1 to 0.4 : 1.

2. A pigment according to claim 1 wherein the ratio of the average thickness of the flakes to the average diameter of the flakes is from 0.028 : 1 to 0.1 : 1.

3. A pigment according to claim 1 or 2, wherein the ratio of the water covering area of the flakes to the specific surface area of the flakes is from 0.19 : 1 to 0.35 : 1.

4. A process for the preparation of an aluminium flake pigment as claimed in any one of the preceding claims, which process comprises milling aluminium powder until aluminium flakes with the desired properties are obtained.

5. A paint comprising an aluminium flake pigment as claimed in any one of claims 1 to 3 and a vehicle therefor.

6. A method of painting an article, which method comprises applying thereto a paint as claimed in claim 5.

7. A method according to claim 6, wherein the paint is applied by spraying.

8. An ink, adhesive or resin incorporating an aluminium flake pigment as claimed in any one of claims 1 to 3.

### Claims for the following Contracting State : ES

1. A process for the preparation of an aluminium flake pigment having a ratio of the average thickness of the flakes to the average diameter of the flakes of from 0.025 : 1 to 0.3 : 1 and a ratio of the water covering area of the flakes to the specific surface area of the flakes of from 0.18 : 1 to 0.4 : 1, which process comprises milling aluminium powder until aluminium flakes with the desired properties are obtained.

2. A process according to claim 1 wherein the ratio of the average thickness of the flakes to the average diameter of the flakes is from 0.028 : 1 to 0.1 : 1.

3. A process according to claim 1 or 2, wherein the ratio of the water covering area of the flakes to the specific surface area of the flakes is from 0.19 : 1 to 0.35 : 1.

4. A process according to any one of the preceding claims, which additionally comprises incorporating the aluminium flake pigment in a paint.

5. A method of painting an article, which method comprises applying thereto a paint as defined in claim 4.

6. A method according to claim 5, wherein the paint is applied by spraying.

7. A process according to any one of claims 1 to 3 which additionally comprises incorporating the aluminium flake pigment in an ink, adhesive or resin.

## Patentansprüche

### Patentansprüche für folgende Vertragsstaaten : BE, DE, FR, GB, IT, SE

1. Pigment aus Aluminiumschüppchen, dadurch **gekennzeichnet**, dass das Verhältnis der durchschnittlichen Dicke der Schüppchen zu dem durchschnittlichen Durchmesser der Schüppchen von 0,025 : 1 bis 0,3: 1 ist und dass das Verhältnis von Wasser, das die Fläche der Schüppchen bedeckt, zu der spezifischen Oberfläche der Schüppchen von 0,18 : 1 bis 0,4 : 1 ist.

2. Pigment nach Anspruch 1, dadurch **gekennzeichnet**, dass das Verhältnis der durchschnittlichen Dicke der Schüppchen zu dem durchschnittlichen Durchmesser der Schüppchen von 0,028 : 1 bis 0,1 : 1 ist.

3. Pigment nach Anspruch 1 oder 2, dadurch **gekennzeichnet**, dass das Verhältnis des Wassers, das die Fläche der Schüppchen bedeckt, zu der spezifischen Oberfläche der Schüppchen von 0,19 : 1 bis 0,35 : 1 ist.

4. Verfahren zur Herstellung eines Pigmentes aus Aluminiumschüppchen nach einem der vorhergehenden Ansprüche, dadurch **gekennzeichnet**, dass Aluminiumpulver gemahlen wird, bis Aluminiumschüppchen mit den gewünschten Eigenschaften erhalten werden.

5. Farbe, umfassend ein Pigment aus Aluminiumschüppchen nach einem der Ansprüche 1 bis 3 und einen Träger dafür.

6. Verfahren zum Bemalen eines Gegenstandes, **gekennzeichnet** durch Auftragen einer Farbe nach Anspruch 5 darauf.

7

7. Verfahren nach Anspruch 6, dadurch **gekennzeichnet**, dass die Farbe durch Sprühen aufgetragen wird.

8. Tinte, Adhäsiv oder Harz, umfassend ein Pigment aus Aluminiumschüppchen nach einem der Ansprüche 1 bis 3.

**Patentansprüche für folgenden Vertragsstaat : ES**

1. Verfahren zur Herstellung eines Pigmentes aus Aluminiumschüppchen mit einem Verhältnis der durchschnittlichen Dicke der Schüppchen zu dem durchschnittlichen Durchmesser der Schüppchen von 0,025 : 1 bis 0,3 : 1 und einem Verhältnis von Wasser, das die Fläche der Schüppchen bedeckt, zu der spezifischen Oberfläche der Schüppchen von 0,18 : 1 bis 0,4 : 1, wobei das Verfahren das Mahlen von Aluminiumpulver umfasst, bis Aluminiumschüppchen mit den gewünschten Eigenschaften erhalten werden.

2. Verfahren nach Anspruch 1, dadurch **gekennzeichnet**, dass das Verhältnis der durchschnittlichen Dicke der Schüppchen zu dem durchschnittlichen Durchmesser der Schüppchen von 0,028 : 1 bis 0,1 : 1 ist.

3. Verfahren nach Anspruch 1 oder 2, dadurch **gekennzeichnet**, dass das Verhältnis des Wassers, das die Fläche der Schüppchen bedeckt, zu der spezifischen Oberfläche der Schüppchen von 0,19 : 1 bis 0,35 : 1 ist.

4. Verfahren nach einem der vorhergehenden Ansprüche, dadurch **gekennzeichnet**, dass es zusätzlich das Einbringen des Pigmentes aus Aluminiumschüppchen in eine Farbe umfasst.

5. Verfahren zum Bemalen eines Gegenstandes, dadurch **gekennzeichnet**, dass es das Auftragen einer Farbe nach Anspruch 4 darauf umfasst.

6. Verfahren nach Anspruch 5, dadurch **gekennzeichnet**, dass die Farbe durch Sprühen aufgetragen wird.

7. Verfahren nach einem der Ansprüche 1 bis 3, dadurch **gekennzeichnet**, dass es zusätzlich das Einfügen des Pigmentes aus Aluminiumschüppchen in eine Tinte, Adhäsiv oder Harz umfasst.

## Revendications

### Revendications pour les Etats contractants suivants : BE, DE, FR, GB, IT, SE

1. Pigment constitué de paillettes d'aluminium, caractérisé en ce que le rapport de l'épaisseur moyenne des paillettes au diamètre moyen des paillettes va de 0,025/1 à 0,3/1 et en ce que le rapport de l'aire de couverture d'eau des paillettes à l'aire de surface spécifique des paillettes va de 0,18/1 à 0,4/1.

2. Pigment selon la revendication 1, dans lequel le rapport de l'épaisseur moyenne des paillettes au diamètre moyen des paillettes va de 0,028/1 à 0,1/1.

3. Pigment selon la revendication 1 ou 2, dans lequel le rapport de l'aire de couverture d'eau des paillettes à l'aire de surface spécifique des paillettes va de 0,19/1 à 0,35/1.

4. Procédé pour la préparation d'un pigment constitué de paillettes d'aluminium tel que revendiqué dans l'une quelconque des revendications précédentes, procédé qui comprend le broyage de poudre d'aluminium jusqu'à l'obtention de paillettes d'aluminium avec les propriétés désirées.

5. Peinture comprenant un pigment constitué de paillettes d'aluminium tel que revendiqué dans l'une quelconque des revendications 1 à 3 et véhicule pour celle-ci.

6. Méthode de peinture d'un article, méthode qui comprend l'application sur celui-ci d'une peinture telle que revendiquée dans la revendication 5.

7. Méthode selon la revendication 6, dans laquelle la peinture est appliquée par pulvérisation.

8. Encre, adhésif ou résine incorporant un pigment constitué de paillettes d'aluminium tel que revendiqué dans l'une quelconque des revendications 1 à 3.

### Revendications pour l'Etat contractant suivant : ES

1. Procédé pour la préparation d'un pigment constitué de paillettes d'aluminium, ayant un rapport de l'épaisseur moyenne des paillettes au diamètre moyen des paillettes de 0,025/1 à 0,3/1 et un rapport de l'aire de couverture d'eau des paillettes à l'aire de surface spécifique des paillettes de 0,18/1 à 0,4/1, procédé qui comprend le broyage de poudre d'aluminium jusqu'à l'obtention de paillettes d'aluminium avec les propriétés désirées.

2. Procédé selon la revendication 1, dans lequel le rapport de l'épaisseur moyenne des paillettes au diamètre moyen des paillettes va de 0,028/1 à 0,1/1.

3. Procédé selon la revendication 1 ou 2, dans lequel le rapport de l'aire de couverture d'eau des paillettes à l'aire de surface spécifique des paillettes va de 0,19/1 à 0,35/1.

4. Procédé selon l'une quelconque des revendications précédentes, qui comprend additionnellement l'incorporation du pigment constitué de paillettes d'aluminium dans une peinture.

5. Méthode de peinture d'un article, méthode qui comprend l'application, sur celui-ci d'une peinture telle que définie dans la revendication 4.

6. Méthode selon la revendication 5, dans laquelle la peinture est appliquée par pulvérisation.

7. Procédé selon l'une quelconque des revendications 1 à 3, qui comprend additionnellement l'incorporation du pigment constitué de paillettes d'aluminium dans de l'encre, un adhésif ou une résine.

## Fig. 3

## Fig 4